# EUROPEAN PATENT SPECIFICATION

(11) **EP 4 131 828 B1**
(45) Date of publication and mention of the grant of the patent: **15.07.2026**
(21) Application number: 21788394.1
(22) Date of filing: 31.03.2021
(51) Int. Cl.: H04L 5/00, H04W 84/12, H04W 76/28, H04L 1/1867, H04L 1/1829

(54) **CHANNEL INDICATION METHOD AND DEVICE IN WIRELESS LOCAL ACCESS NETWORK**
KANALANZEIGEVERFAHREN UND -VORRICHTUNG IN EINEM DRAHTLOSEN LOKALEN ZUGANGSNETZWERK
PROCÉDÉ ET DISPOSITIF D'INDICATION DE CANAUX DANS UN RÉSEAU D'ACCÈS LOCAL SANS FIL

(30) Priority: 17.04.2020 CN 202010305985
(43) Date of publication of application: 08.02.2023
(73) Proprietor: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Gill Jennings & Every LLP
(86) International application number: PCT/CN2021/084356
(87) International publication number: WO 2021/208736

(56) References cited:
- CN-A- 108 400 858
- CN-A- 110 875 805
- US-A1- 2017 257 888
- US-A1- 2018 295 573
- US-A1- 2019 174 410
- US-A1- 2019 215 884
- "Draft Standard for Information technology- Tele- communications and information exchange between systems Local and metropolitan area networks- Specific requirements ? ? Part 11: Wireless LAN Medium Access Control ? (MAC) and Physical Layer (PHY) Specifications ? ? Amendment 1: Enhancements for High", vol. 802.11ax drafts, no. D6.0, 26 November 2019 (2019-11-26), pages 1 - 780, XP068160189, Retrieved from the Internet <URL:http://www.ieee802.org/11/private/Draft_Standards/11ax/Draft%20P802.11ax_D6.0.pdf> [retrieved on 20191126]

## Description

### TECHNICAL FIELD

This application relates to the wireless communications field, and in particular, to a channel indication method and apparatus in a wireless local area network.

### BACKGROUND

With evolution and development of wireless local area network (Wireless Local Access Network, WLAN for short) communication standards from 802.11a and 802.11g to 802.11n, 802.11ac, 802.11ax (also referred to as WiFi 6 or Wi-Fi 6), and the like, an allowed transmission bandwidth and quantity of space-time streams in these standards also gradually change. A transmission bandwidth allowed by the 802.11a or 802.11g standard is 20 MHz. A transmission bandwidth allowed by the 802.11n standard is 20 MHz or 40 MHz. A transmission bandwidth allowed by the 802.11ax standard is 20 MHz, 40 MHz, 80 MHz, or 160 MHz. A transmission rate of a WLAN system is expected to be higher by using a larger bandwidth. A next-generation standard IEEE 802.11be (also referred to as WiFi 7 or Wi-Fi 7) is referred to as extremely high throughput (Extremely High Throughput, EHT). To significantly improve a peak throughput is considered as its most important technical objective. A supported bandwidth is expanded from 160 MHz in IEEE 802.11ax to at least 320 MHz, to further increase a transmission rate.

Higher bandwidths can serve more users. However, when a quantity of users increases, overheads of signaling also increase. In 802.11ax (Wi-Fi 6) and earlier systems, a signaling part in a sent data packet needs to be repeated on each 20 MHz channel. When the quantity of users increases, signaling information of a plurality of users still needs to be sent on each 20 MHz channel. Consequently, signaling overheads are high, and transmission efficiency is low.

US2019174410A1 discloses systems and methods for efficiently managing channel access for wireless access points.

### SUMMARY

To resolve the foregoing problem, this application provides a channel indication method and apparatus applied to a WLAN. The method and apparatus are applied to a wireless communication system, so that channels can be fully utilized, and spectral efficiency can be improved.

According to a first aspect, a channel indication method applied to a wireless local area network WLAN is provided as set out in appended claim 1. The method includes: An access point AP generates a target wake time TWT element, where the TWT element is for establishing a TWT protocol with a station, the TWT element includes channel rotation information, and the channel rotation information indicates the station to perform parking channel rotation; and the AP sends the TWT element.

According to a second aspect, a channel indication method applied to a wireless local area network WLAN is provided as set out in appended claim 2. The method includes the following steps.

A station STA receives a target wake time TWT element from an access point, where the TWT element is for establishing a TWT protocol between the access point and the station, the TWT element includes channel rotation information, and the channel rotation information indicates the station whether to perform parking channel rotation; and the station determines, based on the channel rotation information, whether to perform parking channel rotation. If the station determines to perform parking channel rotation, the station performs parking channel rotation based on the TWT element.

According to a third aspect, a channel indication apparatus applied to a wireless local area network WLAN is provided. The apparatus is applied to an access point AP. The apparatus may be an access point or a chip in the access point, for example, a Wi-Fi chip, and includes:
a processing unit, configured to generate a target wake time TWT element, where the TWT element is for establishing a TWT protocol with a station, the TWT element includes channel rotation information, and the channel rotation information indicates the station to perform parking channel rotation; and
a transceiver unit, configured to send the TWT element.

According to a fourth aspect, a channel indication apparatus applied to a wireless local area network WLAN is provided. The apparatus is applied to a station STA. The apparatus may be a station or a chip in the station, for example, a Wi-Fi chip, and includes:
a transceiver unit, configured to receive a target wake time TWT element from an access point, where the TWT element is for establishing a TWT protocol between the access point and the station, the TWT element includes channel rotation information, and the channel rotation information indicates the station to perform parking channel rotation; and
a processing unit, configured to perform parking channel rotation based on the TWT element.

In an implementation of any one of the foregoing aspects, the channel rotation information includes a channel rotation indication, and the channel rotation indication is carried in a reserved bit in the TWT element. The reserved bit of the TWT element carries the channel rotation indication, so that signaling overheads can be reduced. This is compatible with an existing structure of the TWT element, and implementation is simple.

In an implementation of any one of the foregoing aspects, in the TWT protocol, one TWT interval includes a plurality of TWT service periods, and the channel rotation indication indicates the station to perform parking channel rotation among the plurality of TWT service periods. Alternatively, in the TWT protocol, one TWT interval includes one TWT service period, and the channel rotation indication indicates the station to perform parking channel rotation among a plurality of TWT service periods in a plurality of TWT intervals.

The station may determine, based on the channel rotation indication, whether channel rotation can be performed, and may perform rotation according to the TWT protocol. In this way, the station does not always stay on a channel that is far away from a primary channel in a plurality of TWT service periods, a probability of being served is not always low, and fairness is ensured.

In an implementation of any one of the foregoing aspects, the TWT element further includes a quantity of parking channels that can be rotated. The station may determine a quantity of channels that can be rotated.

In an implementation of any one of the foregoing aspects, the TWT element further includes channel rotation sequence information indicating a channel rotation sequence. The station may perform channel rotation based on the sequence information. The access point may adjust a rotation sequence in real time according to a channel status. This improves rotation flexibility. In another implementation, the station may perform channel rotation according to a preset rotation sequence, and the station and the access point do not need to perform signaling interaction. In this case, signaling overheads is reduced.

In an implementation of any one of the foregoing aspects, the channel rotation sequence information includes a plurality of TWT channel numbers. One TWT channel number indicates one parking channel. A channel rotation sequence is consistent with a sequence of the TWT channel numbers. Alternatively, in an implementation of any one of the foregoing aspects, the channel rotation sequence information includes a TWT channel rotation pattern field that indicates a parking channel rotation sequence.

In an implementation of any one of the foregoing aspects, the TWT element further includes a TWT channel field, and the TWT channel field indicates an initial channel from which channel rotation starts.

In an implementation of any one of the foregoing aspects, the TWT element is an individual TWT information element or a broadcast TWT information element.

According to a fifth aspect, an embodiment of this application provides a communication apparatus. The apparatus is specifically an access point AP. The access point has a function of implementing behavior of the access point in the foregoing method designs. The function may be implemented by hardware, or may be implemented by hardware executing corresponding software. The hardware or the software includes one or more modules corresponding to the foregoing function.

In a possible design, the access point AP includes a processor and a transceiver. The processor is configured to support the access point to perform the corresponding functions in the foregoing methods. The transceiver is configured to: support communication between the access point and a STA, and send information, a data packet, or instructions in the foregoing method to the STA. The access point may further include a memory. The memory is configured to couple to the processor and store program instructions and data that are necessary for the access point.

According to a sixth aspect, an embodiment of this application provides a station. The station has a function of implementing behavior of the STA in the foregoing method designs. The function may be implemented by using hardware or may be implemented by using hardware executing corresponding software. The hardware or the software includes one or more modules corresponding to the foregoing function. The module may be software and/or hardware.

In a possible design, a structure of the station includes a transceiver and a processor. The transceiver is configured to support communication between the STA and an access point AP. The station may further include a memory. The memory is configured to be coupled to the processor and store program instructions and data that are necessary for the station.

According to still another aspect, an embodiment of this application provides a wireless communication system. The system includes the access point and the STA in the foregoing aspects.

According to another aspect, an embodiment of this application provides a chip or a chip system, including an input/output interface and a processing circuit, where the input/output interface is used for information or data exchange, and the processing circuit is configured to run instructions, so that an apparatus mounted in the chip or the chip system performs the method in any one of the foregoing aspects.

According to another aspect, this application provides a computer-readable storage medium. The computer-readable storage medium stores instructions, and the instructions may be executed by one or more processors on a processing circuit. When the computer-readable storage medium runs on a computer, the computer is enabled to perform the methods in any one of the foregoing aspects.

According to another aspect, this application provides a computer program product that includes instructions. When the computer program product runs on a computer, the computer is enabled to perform the method in the foregoing aspect.

According to another aspect, this application provides a chip system, where the chip system includes a processor, configured to support an apparatus mounted in the chip system in implementing the method in any one of the foregoing aspects, for example, generating or processing data and/or information in the foregoing method. In a possible design, the chip system further includes a memory. The memory is configured to store program instructions and data for a data sending device. The chip system may include a chip, or may include a chip and another discrete component.

### BRIEF DESCRIPTION OF DRAWINGS

To describe embodiments of the present invention more clearly, the following briefly describes accompanying drawings for describing the embodiments. It is clear that a person of ordinary skill in the art can further obtain other drawings based on these accompanying drawings without creative efforts.
FIG. 1 is a schematic diagram of a possible application scenario according to an embodiment of this application;
FIG. 2a is a schematic diagram of channel division in an 802.11 system;
FIG. 2b is a schematic diagram of segment division in a channel in an 802.11 system;
FIG. 3 shows a schematic diagram of a structure of a signaling part of a PPDU according to an embodiment of this application;
FIG. 4 is a schematic flowchart of a channel indication method in a WLAN according to an embodiment of this application;
FIG. 5a is an example of channel rotation according to an embodiment of this application;
FIG. 5b is another example of channel rotation according to an embodiment of this application;
FIG. 5c is still another example of channel rotation according to an embodiment of this application;
FIG. 6a is a schematic diagram of a structure of a TWT element according to an embodiment of this application;
FIG. 6b is a schematic diagram of a structure of an individual TWT element according to an embodiment of this application;
FIG. 6c is a schematic diagram of a structure of a broadcast TWT element according to an embodiment of this application;
FIG. 6d is a schematic diagram of a structure of a TWT information frame according to an embodiment of this application;
FIG. 7 is a schematic flowchart of another channel indication method in a WLAN according to an embodiment of this application;
FIG. 8 is an example of channel rotation according to an embodiment of this application;
FIG. 9 is a schematic diagram of a structure of an apparatus according to an embodiment of this application;
FIG. 10 is a schematic diagram of a structure of another apparatus according to an embodiment of this application; and
FIG. 11 is a schematic diagram of a structure of still another apparatus according to an embodiment of this application.

### DESCRIPTION OF EMBODIMENTS

A scenario described in embodiments of this application is intended to describe the technical solutions in the embodiments of this application more clearly, and does not constitute a limitation on the technical solutions provided in the embodiments of this application.

An embodiment of this application provides a channel indication method, which may be applied to a wireless communication system, for example, a cellular network or a wireless local area network system. Stations can be allocated to different frequency segments (frequency Segment), and the stations may further perform parking channel rotation, to ensure fairness between a plurality of stations, and therefore improve transmission efficiency. The method may be implemented by a communication device in the wireless communication system or a chip or a processor in a communication device.

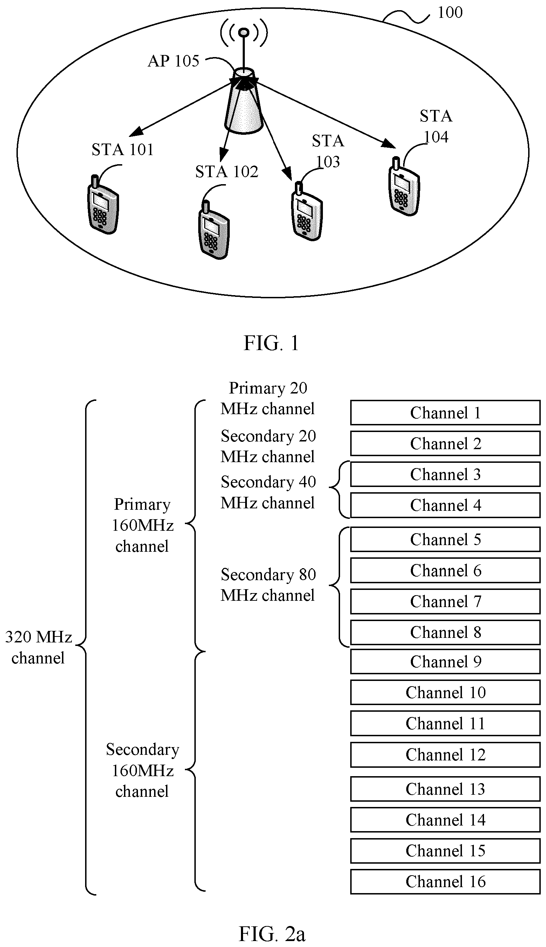

FIG. 1 is a wireless local access network (Wireless Local Access Network, WLAN for short) communication system 100. The communication system 100 includes an access point AP 105 and one or more stations (a STA 101 to a STA 104). The access point and the station support a WLAN communication protocol. The communication protocol may include the IEEE 802.11be (or referred to as Wi-Fi 7, EHT protocol), and may further include protocols such as the IEEE 802.11ax and the IEEE 802.11ac. Certainly, the communication protocol may further include a next-generation protocol of IEEE 802.11be and the like with continuous evolution and development of communication technologies. A WLAN is used as an example. The apparatus for implementing the method in this application may be an access point or a station in the WLAN, or a chip or a processing system installed in the access point or the station.

The access point (for example, the AP 105) is an apparatus having a wireless communication function, supports communication over a WLAN protocol, has a function of communicating with another device (for example, a station or another access point) in a WLAN network, and certainly, may further have a function of communicating with another device. In the WLAN system, an access point may be referred to as an access point station (AP STA). The apparatus may be an entire device, or may be a chip or a processing system installed in the entire device. The device in which the chip or the processing system is installed may implement the method and the function in embodiments of this application under control of the chip or the processing system. The AP in embodiments of this application is an apparatus providing a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

The station is an apparatus having a wireless communication function, supports communication by using a WLAN protocol, and has a capability of communicating with another station or an access point in a WLAN network. In the WLAN system, a station may be referred to as a non-access point station (non-access point station, non-AP STA). For example, the STA is any user communication device that allows a user to communicate with an AP and further communicate with a WLAN. The apparatus may be an entire device, or may be a chip or a processing system installed in the entire device. The device in which the chip or the processing system is installed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, an AR, a VR, or another wearable device), a smart device in smart office (for example, a printer, a projector, a loudspeaker, or a stereo), an internet of vehicles device in the internet of vehicles, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not specifically limited in embodiments of this application, and are merely examples for description herein.

In the WLAN, a channel is usually divided into a primary channel and a secondary channel, and the secondary channel may include one or more sub-channels. In an example, if division is performed by using 20 MHz as a basic bandwidth unit, when a bandwidth of a channel is 20 MHz, the channel includes only one primary channel with a bandwidth of 20 MHz; when a bandwidth of a channel is greater than 20 MHz, the channel includes one primary channel with a bandwidth of 20 MHz, and one or more secondary channels of 20 MHz. For example, FIG. 2a is a schematic diagram of a 320 MHz channel. The 320 MHz channel includes a 160 MHz primary channel and a 160 MHz secondary channel. The 320 MHz channel is sequentially numbered as a channel 1 to a channel 16, and each number represents a 20 MHz channel. The channel 1 represents a 20 MHz primary channel (primary 20 MHz channel, P20 for short). The channel 2 represents a 20 MHz secondary channel (secondary 20 MHz channel, S20 for short). A 40 MHz secondary channel (secondary 40 MHz channel, S40 for short) includes two sub-channels whose bandwidths each are 20 MHz: the channel 3 and the channel 4. An 80 MHz secondary channel (secondary 80 MHz channel, S80 for short) includes four sub-channels whose bandwidths each are 20 MHz: the channels 5, 6, 7, and 8. The channels 5 and 6 are adjacent to each other, the channels 6 and 7 are adjacent to each other, and the channels 7 and 8 are adjacent to each other. One 160 MHz primary channel includes the channels 1 to 8, and one 160 MHz secondary channel includes the channels 9 to 16. It may be understood that, a meaning of one 160 MHz secondary channel is that a bandwidth of the secondary channel is 160 MHz, and a meaning of one 160 MHz primary channel is that a bandwidth of the primary channel is 160 MHz. In the embodiments of this application, a secondary channel may alternatively be referred to as a nonprimary channel, and the 160 MHz secondary channel may alternatively be referred to as the nonprimary 160 MHz channel. The primary channel is a common channel of operation for stations that are members of a basic service set (The common channel of operation for stations (STAs) that are members of the basic service set (BSS)). A station in the basic service set can perform channel contention on the primary channel, to preempt a channel resource. In FIG. 1, the STA 101 to the STA 104 or the access point 105 in a basic service set may perform channel contention on the channel 1, to preempt a channel resource.

In an example, an arrangement manner of the channels 1 to 16 may be shown in FIG. 2a, or may be a plurality of other manners. This is not limited in this application. For ease of description, in all embodiments of this application, for the channel division in the WLAN, the channel 1 is used as the primary channel. It should be noted that the 802.11 system supports channel bandwidths of different sizes, and the channel may be contiguous bandwidths of 20 MHz, 40 MHz, 80 MHz, and 160 MHz, a noncontiguous bandwidth of 80 MHz+80 MHz, 320 MHz, 240 MHz+80 MHz, 160 MHz+160 MHz, or the like. In a next-generation 802.11 standard, the channel bandwidth may alternatively be another bandwidth. Optionally, a channel division method thereof may be similar to that of the foregoing 320 MHz channel, and details are not described herein again.

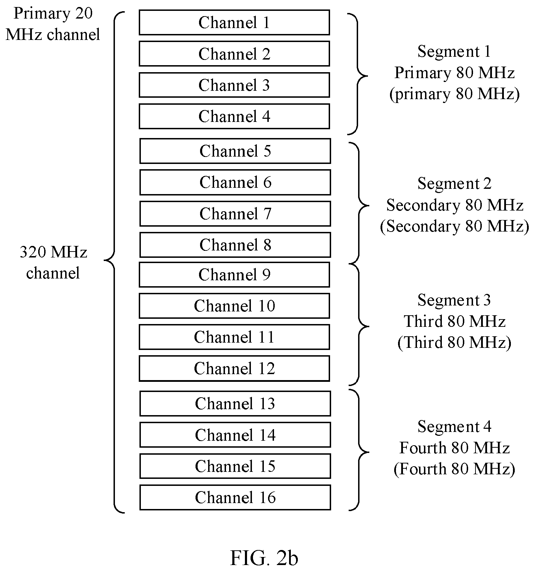

In a WLAN, a contiguous spectrum block for transmission may be referred to as a frequency segment (frequency segment). One WLAN channel may include a plurality of frequency segments, and a bandwidth of each frequency segment may be 80 MHz, 40 MHz, 20 MHz, or 160 MHz. For example, a bandwidth of a segment is 80 MHz. In this case, the 320 MHz channel shown in FIG. 2b may be divided into four segments. The frequency segment may alternatively be referred to as a frequency slice, or referred to as a slice or a segment for short.

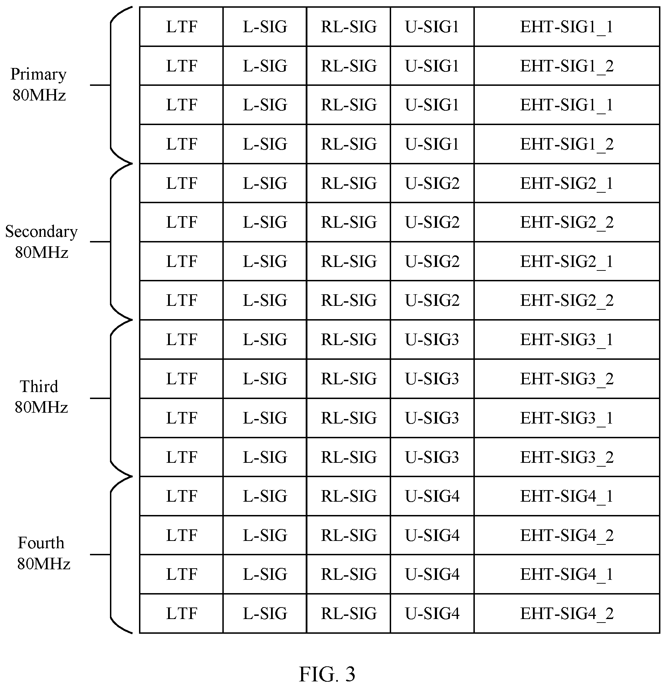

In the 802.11ax protocol, a signaling part in a high efficiency physical layer protocol data unit (high efficiency PHY protocol data unit, HE PPDU) needs to be repeatedly carried on each 20 MHz channel. When a bandwidth supported by a user in a WLAN is expanded from 160 MHz to 320 MHz, as a quantity of users (or stations) increases, signaling information of a plurality of users still needs to be repeatedly sent on each 20 MHz channel. As a result, there is excessive repeated signaling, signaling overheads are high, and transmission efficiency is low. To improve transmission efficiency and reduce signaling overheads, an improvement idea is as follows: As shown in FIG. 3, an entire large bandwidth (for example, 320 MHz) is divided into several segments (segments), and each segment transmits only signaling information of a user parking on the segment. For example, an extremely high throughput physical layer protocol data unit (EHT PPDU) repeatedly carries universal signaling (Universal signaling, U-SIG) U-SIG 1 in four 20 MHz of the first segment, where the U-SIG 1 includes a transmission parameter of the EHT PPDU; two content channels EHT-SIG 1_1 and EHT-SIG 1_2 of an EHT-SIG are sent on the first segment. The EHT-SIG further includes another transmission parameter of the EHT PPDU. The U-SIG does not need to be repeatedly sent on each 20 MHz channel of the entire bandwidth of 320 MHz, and the two content channels of the EHT-SIG do not need to be repeatedly sent on 320 MHz. In this way, signaling overheads are greatly reduced, a quantity of symbols occupied by the signaling part is shortened, and transmission efficiency is improved. In addition, a STA parking on the first segment may obtain data of the STA by parsing based on the U-SIG 1, the EHT-SIG 1_1, and the EHT-SIG 1_2. For example, the stations 101 to 104 in FIG. 1 separately park on four segments. The STA 101 parks on a segment 1 (Segment 1), the STA 102 parks on a segment 2 (Segment 2), the STA 103 parks on a segment 3 (Segment 3), and the STA 104 parks on a segment 4 (Segment 4). In this case, the AP needs to send signaling information of the STA 101 only on the segment 1, send signaling information of the STA 102 only on the segment 2, send signaling information of the STA 103 only on the segment 3, and send signaling information of the STA 104 only on the segment 4. Therefore, signaling overheads are reduced, and transmission efficiency is improved.

In embodiments of this application, each segment may have a temporary primary channel. The temporary primary channel may be temporarily used as an operating channel of a station. The station may park on (park on) or operate on (operate on) the temporary primary channel to receive signaling or data. The temporary primary channel in embodiments of this application may alternatively be referred to as a parking channel (parking channel) or another name. In embodiments of this application, the parking channel and the temporary primary channel are used interchangeably. A location of the parking channel may be predefined. For example, the parking channel is a first 20 MHz channel of each segment. Each user only needs to receive signaling on one segment to obtain its own signaling information. In this way, on each segment, only signaling information of a user parking on the segment rather than signaling information of all users needs to be sent, which reduces signaling overheads.

The following further describes how to allocate users (or stations) to different segments and notify each station of its respective parking channel or temporary primary channel, to reduce signaling overheads and improve transmission efficiency.

An embodiment of this application provides an implementation: An AP and a STA negotiate by using a target wake time (target wake time, TWT) request frame and a TWT response frame, so that the STA can park on a 20 MHz channel or an 80 MHz channel in a TWT service period (service period), to receive downlink data sent by the access point to the STA, or send uplink data after receiving a trigger frame sent by the access point. For this implementation, the station can park only on a specific channel, and the parking channel cannot be changed.

An embodiment of this application provides another implementation, where a solution of this embodiment is to enable a station to use different parking channels in different TWT service periods based on a target wake time (target wake time, TWT) technology, and the station may perform parking channel rotation.

Generally, when a parking channel of a station is far away from a primary channel, a probability that the station is served is low; when a parking channel of a station is close to the primary channel, a probability that the station is served is high. This is because a channel contention rule is as follows: An access point needs to perform channel contention on the primary channel. If the secondary 20 MHz channel is also idle within a period of time before contention succeeds, the access point may use a 40 MHz channel. If the secondary 40 MHz channel is also idle within the period of time before contention succeeds, the access point may use an 80 MHz channel. If the secondary 80 MHz channel is also idle within the period of time before the contention succeeds, the access point may use a 160 MHz channel. If the secondary 160 MHz channel is also idle within the period of time before contention succeeds, the access point may use a 320 MHz channel. It can be learned that a probability that the access point uses a large bandwidth is less than a probability that the access point uses a small bandwidth. Therefore, when the parking channel of the station is far away from the primary channel, the access point needs to contend for a larger bandwidth, so that the access point can send downlink data to the station on the parking channel of the station, or send a trigger frame to the station to schedule the station to send uplink data. For example, as shown in FIG. 2b, if the STA 104 parks on the channel 13 of the segment 4, only when the AP obtains the 320 MHz channel through contention, the STA 104 can receive downlink data sent by the access point, or can be scheduled to send uplink data to the access point. It can be learned that, when the parking channel remains unchanged, different stations are served at different probabilities, thereby causing unfairness.

Compared with the first implementation, in the second implementation, not only stations can be allocated to different segments, but also stations can perform parking channel rotation. For example, the STA 104 parks on the channel 13 of the segment 4 in one time period, and after a next time period, the STA 104 switches to park on the channel 1 of the segment 1, that is, switches from a channel far away from the primary channel to a channel close to the primary channel. In this case, a possibility that the STA 104 is served is increased. Therefore, a possibility that a station that is allocated to be close to the primary channel is served is not always high, and a possibility that a station that is allocated to be far away from the primary channel is served is not always low. In this way, fairness between a plurality of stations can be ensured.

It should be noted that, in embodiments of this application, the parking channel, the temporary primary channel, and the like may be used interchangeably, and parking channel rotation may also be referred to as temporary primary channel rotation or the like.

In this embodiment of this application, a station that sends channel rotation information to request for parking channel rotation may be referred to as a TWT requesting STA, and a station that sends channel rotation information to indicate another station to perform parking channel rotation may be referred to as a TWT responding STA. The TWT requesting STA and the TWT responding STA may be stations of an access point type or stations of a non-access point type, for example, the STA 101 to the STA 104 and the AP 105 shown in FIG. 1. In other words, the solutions in this application may be applied to communication between an access point and a station, or may be applied to communication between stations, or may be applied to communication between an access point and an access point. Communication between the access points may be cooperative communication.

The following further describes the embodiments of this application with reference to more accompanying drawings. The aspects described herein may be used as part of the IEEE 802.11 protocol.

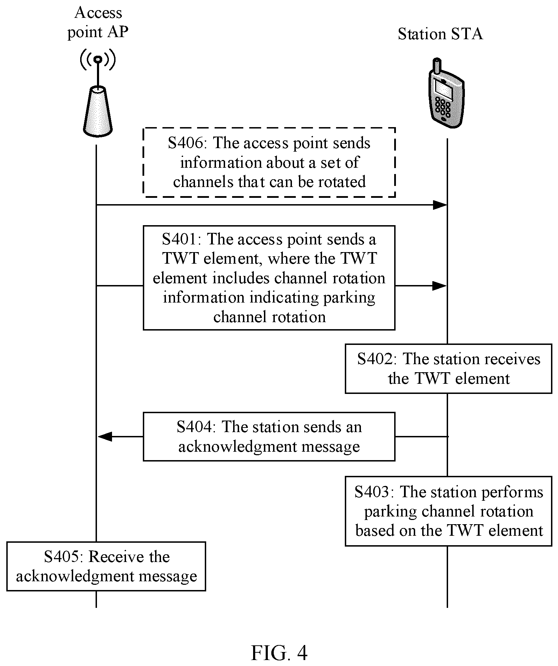

An embodiment 1 provides a channel indication method in a wireless local area network. FIG. 4 is a schematic flowchart of a channel indication method in a wireless local area network according to an embodiment. For ease of description, this embodiment of this application uses an example in which a TWT requesting STA is a non-access point station and a TWT responding STA is an access point station.

S401: An access point sends a TWT element, where the TWT element includes channel rotation information, and the channel rotation information indicates parking channel rotation.

For ease of description, embodiments of this application use an example in which an access point station is a TWT responding STA. The access point sends the channel rotation information to indicate a STA to perform parking channel rotation, so as to indicate the station to operate or park on different segments, and switch between parking channels among different segments. This improves fairness.

The access point may autonomously send the TWT element to indicate a station to perform parking channel rotation, or the access point receives a TWT element that is of a station and that is for a parking channel rotation request, and then responds to the station to notify the station that the request of the station is allowed. In other words, the channel rotation information sent by the access point may further indicate that a channel rotation request is allowed. Optionally, before the access point sends the channel rotation information, if a TWT element that is sent by a station and that includes information about a channel rotation request is received, the channel rotation information sent by the TWT responding STA indicates that the channel rotation request of the station is allowed.

The TWT element is used to establish a TWT protocol with a station, and the TWT element may carry a TWT parameter.

Optionally, the TWT element may also be referred to as a TWT information element.

S402: A station receives the TWT element.

Optionally, the station receiving the TWT element may be a TWT requesting STA. Before S401, the TWT requesting STA may further first send a TWT element to request channel rotation, and a parameter of requested channel rotation is carried in the TWT element.

S403: The station performs parking channel rotation based on the TWT element.

The station may determine, based on the channel rotation information, whether to perform parking channel rotation. If parking channel rotation can be performed, the station may perform rotation based on other information in the TWT element or a predefined rotation sequence.

Optionally, the method further includes S404: The station sends an acknowledgment message to the access point, to acknowledge the TWT element. Correspondingly, S405: The access point receives the acknowledgment message. The acknowledgment message may be an acknowledgment frame, and is used to acknowledge a receiving status of a frame carrying the TWT element, for example, that receiving succeeds. It should be noted that a sequence of steps S404 and S403 is not limited. The TWT protocol between the access point and the station is established by exchanging the TWT element and the acknowledgment frame.

Based on the TWT element, the TWT protocol may be established between the TWT requesting STA and the TWT responding STA. TWT protocol agreement: It is agreed that, time after a specific time point after the TWT protocol starts is divided into several time periods of an equal length, and a length of each time period is referred to as a TWT wake interval (TWT wake Interval), or may be referred to as a TWT interval (TWT interval). Based on the TWT protocol, embodiments of this application provide a plurality of rotation mechanisms. In the first channel rotation mechanism, a station that receives channel rotation information performs rotation within a TWT wake interval. In the second channel rotation mechanism, a station that receives channel rotation information performs rotation among TWT wake intervals.

In the first rotation mechanism, each TWT wake interval further includes at least one service period (service period, SP). In each service period, the station uses a specific parking channel, and different service periods within one TWT interval correspond to different parking channels. In other words, a parking channel of the station rotates among different service periods in one TWT interval. Optionally, rotation of parking channels may be periodic.

In the second rotation mechanism, each TWT wake interval may be further divided into one TWT service period (service period, SP) and one sleep period. In each service period, the station uses a specific parking channel, and parking channels corresponding to service periods in different TWT intervals change cyclically. In other words, service periods in different TWT wake intervals correspond to different parking channels. In other words, a parking channel of the station rotates among service periods in a plurality of TWT intervals. Optionally, rotation of parking channels may be periodic.

In embodiments of this application, the service period may alternatively be referred to as a service phase (service phase, SP). The sleep period may alternatively be referred to as a sleep phase.

Optionally, the channel rotation information includes a channel rotation indication (channel rotation indication), indicating whether parking channel rotation is allowed. In an example, the channel rotation indication specifically includes 1 bit. When the bit is a first value, it indicates that rotation is allowed on a parking channel on which the station operates. When a value of the one bit is a second value, it indicates that a parking channel on which the station operates remains unchanged. In an example, if a standard specifies that the first rotation mechanism is used, the first value of the channel rotation indication indicates that the station is allowed to perform parking channel rotation among different service periods in one TWT interval, and the second value indicates that the station is not allowed to perform parking channel rotation among different service periods in one TWT interval. In another example, if the standard specifies that the second rotation mechanism is used, the first value of the channel rotation indication indicates that the station is allowed to perform parking channel rotation among a plurality of TWT intervals, and the second value indicates that the station is not allowed to perform parking channel rotation among a plurality of TWT intervals. In still another example, if the standard specifies that both the first rotation mechanism and the second rotation mechanism may be used, the channel rotation indication may include a plurality of bits, for example, two bits, to separately indicate that parking channel rotation among different service periods in one TWT interval is allowed, that parking channel rotation among a plurality of TWT intervals is allowed, or that parking channel rotation is not allowed. Certainly, if the standard specifies that another rotation mechanism is used, the channel rotation indication indicates whether the another rotation mechanism for parking channel rotation is allowed to be used.

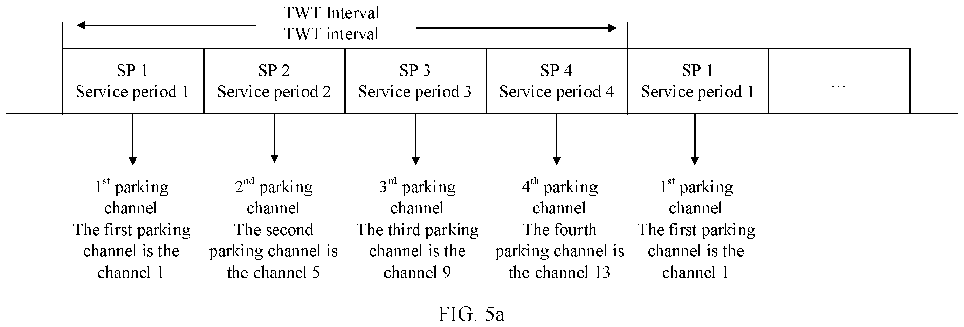

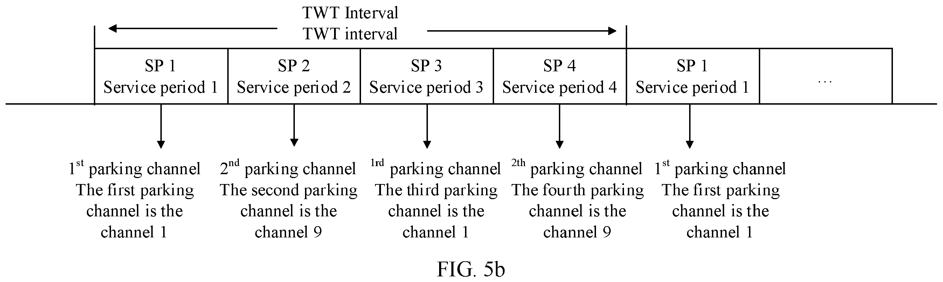

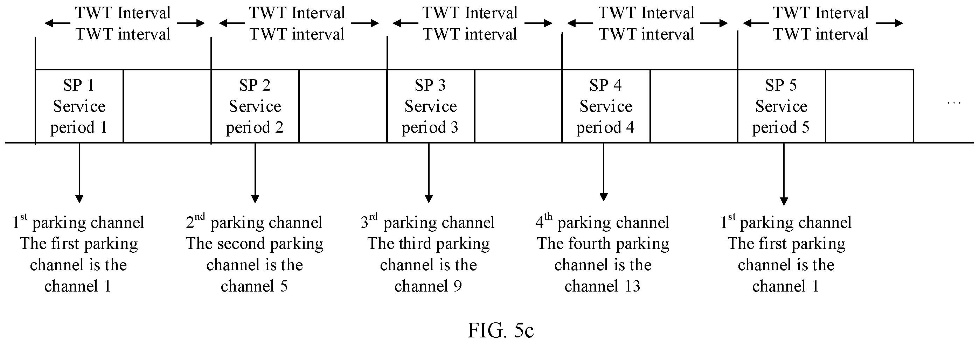

A station that receives the channel rotation indication performs parking channel rotation by using a corresponding channel mechanism. It is assumed that the channel rotation indication indicates to perform parking channel rotation, the station performs rotation using the first rotation mechanism, one TWT interval is divided into four service periods as shown in FIG. 5a, and the station receiving the TWT element parks on the channel 1, the channel 5, the channel 9, and the channel 13, that is, the station performs rotation between the channel 1, the channel 5, the channel 9, and the channel 13. In this case, optionally, channel rotation may be periodic. For example, the station may still perform rotation between the channel 1, the channel 5, the channel 9, and the channel 13 among four service periods in the next TWT interval. For another example, as shown in FIG. 5b, one TWT interval includes four service periods. The station receiving the TWT element may separately park on the channel 1 and the channel 9, that is, the station may perform rotation between the channel 1 and the channel 9. In this case, the station may park on the channel 1 in a service period 1, and park on the channel 9 in a service period 2; periodically, park on the channel 1 in the service period 3, and park on the channel 9 in the service period 4. It is assumed that the channel rotation indication indicates that parking channel rotation is performed, the station performs rotation using the second rotation mechanism, and each TWT interval includes one TWT service period and one sleep period. As shown in FIG. 5c, in a TWT service period included in the first TWT interval, the station parks on the first channel, in a TWT service period included in the second TWT interval, the station parks on the second channel, and so on. Because there are only four parking channels in total, a parking channel corresponding to the TWT service period in the fifth TWT interval is the first channel. For example, the first parking channel is the channel 1, the second parking channel is the channel 5, the third parking channel is a channel 9, and the fourth parking channel is a channel 13. That is, the station performs rotation between the channel 1, the channel 5, the channel 9, and the channel 13 among four TWT wake intervals. Optionally, channel rotation may be periodic. For example, in four service periods in next four TWT intervals, the station may still perform rotation between the channel 1, the channel 5, the channel 9, and the channel 13.

It should be noted that the TWT service period is used as a channel rotation granularity in both the foregoing two rotation mechanisms. The channel indication method and the channel rotation method provided in embodiments of this application is further applicable to a time granularity smaller or larger than the TWT service period. For example, the TWT service period further includes M subdivided time periods, and the station may implement foregoing channel rotation among the M subdivided time periods. For another example, the station may implement channel rotation among every two TWT service periods. For example, in FIG. 5a, the station may park on the channel 1 in the SP 1 and the SP 2, and switch to park on the channel 9 in the SP3 and the SP 4. In an implementation, the TWT element may further carry rotation time length information, to indicate a time granularity for channel rotation by the station.

Optionally, in step S403, a channel rotation sequence in which the station performs channel rotation based on the TWT element may include but is not limited to the following.

Manner 1: A channel is used as an initial channel, and the station performs rotation in a predefined sequence. The initial channel may be indicated by a TWT channel field in the TWT information element. The predefined sequence may be: Rotation starts from a channel with a smaller channel number to a channel with a larger channel number; or Rotation starts from a channel with a larger channel number to a channel with a smaller channel number. In the manner 1, the station determines, based on the channel rotation indication, whether rotation is required, and determines, based on the TWT channel field, the initial channel that rotation starts from. If the station determines that rotation is required, the station performs channel rotation in the predefined sequence. In this manner, rotation sequence information does not need to be carried, signaling overheads are low, and the rotation manner is simple.

Manner 2: The TWT information element carries channel rotation sequence information that indicates a channel rotation sequence, and the station performs rotation based on the channel rotation sequence information. Specifically, in an example, the TWT information element may carry one TWT channel list (TWT channel list) field that carries a plurality of TWT channel numbers (TWT channel numbers). One TWT channel number indicates one parking channel. The station performs rotation between parking channels indicated by the plurality of TWT channel numbers, and a rotation sequence is determined by an occurrence sequence of the plurality of TWT channel numbers. In another example, the TWT information element carries a TWT channel rotation pattern (TWT channel rotation pattern) field, and each value of the TWT channel rotation pattern field indicates a channel rotation scheme. For example, a first value represents a rotation sequence from the channel 1 to the channel 5 to the channel 9 to the channel 13, a second value represents a rotation sequence from the channel 2 to the channel 6 to the channel 11, and the like. For example, if a total quantity of channels that can be rotated is N, there are N! rotation schemes in total. Therefore, a value of the TWT channel rotation pattern field may indicate one or more of the N! rotation schemes. In a case of the manner 2, the TWT information element may alternatively not carry the foregoing channel rotation indication, but carry the rotation sequence information to indicate both the channel rotation sequence and that rotation is allowed. When receiving the rotation sequence information, the station can determine that the access point AP allows the station to perform channel rotation and a specific rotation sequence. In this manner, channel rotation is more flexible and fairness is better.

Optionally, the TWT element may further include information indicating a quantity N of parking channels. The information indicating the quantity of parking channels may be indicated in an explicit indication manner or an implicit indication manner. In an explicit indication manner, the TWT element carries a field of the quantity of parking channels (or referred to as a field of a quantity of channels that can be rotated) that indicates the quantity N of channels that can be rotated. In an implicit indication manner, the TWT information element further includes a TWT wake interval mantissa (TWT Wake Interval Mantissa) field and a TWT wake interval exponent (TWT Wake Interval Exponent) field, and may be used to calculate duration of a TWT interval. The TWT information element further includes a nominal minimum TWT wake duration (Nominal Minimum TWT Wake Duration) field that indicates duration of each TWT service period. Because each TWT interval includes N TWT SPs, it may be specified that duration of the TWT interval should be set to N times the duration of the TWT service period. In the first rotation mechanism, when the quantity of parking channels is the same as a quantity of service periods in one TWT interval, the quantity of parking channels is equal to the quantity of TWT service periods, and the quantity N of parking channels may be implicitly calculated based on the duration of the TWT interval and the quantity of TWT service periods. Optionally, in the first rotation mechanism, when the quantity of parking channels is the same as the quantity of service periods in one TWT interval, the information indicating the quantity of parking channels in the TWT element actually indicates the quantity of TWT service periods in each TWT interval. In other words, the TWT element carries at least two of the following: duration of each TWT interval, duration of each TWT service period, and the quantity of TWT service periods in each TWT interval. For example, in this rotation mode (where the channel rotation information indication indicates a mode for continuous TWT channel rotation), a value of the Nominal Minimum TWT Wake Duration field may be ignored, and duration of the TWT service period is indicated by dividing the duration of the TWT interval by N.

Optionally, in addition to adding the information indicating the quantity of parking channels to the TWT element, the access point may further indicate the quantity of parking channels in another element. Optionally, the another element may be an operation element (operation element), for example, an extremely high throughput operation element (EHT operation element), and the element may be carried in a beacon frame. In an implementation, a BSS bandwidth is used to indicate a quantity of parking channels or indicate a quantity of service periods in a TWT interval. There is a mapping relationship between a BSS bandwidth and a quantity of parking channels. Based on the mapping relationship, a station that receives the BSS bandwidth can not only determine the BSS bandwidth, but also determine a quantity of parking channels corresponding to the bandwidth.

If a bandwidth of each segment is 80 MHz, the mapping relationship between a BSS bandwidth and a quantity of parking channels is shown in Table 1.

**Table 1**

| BSS bandwidth | Quantity of parking channels |
|---|---|
| 320 MHz or 160+160 MHz | 4 |
| 240 MHz or 160+80 MHz | 3 |
| 160 MHz or 80+80 MHz | 2 |
| 80 MHz, 40 MHz, or 20 MHz | 1 |

If a bandwidth of each segment is 40 MHz, the mapping relationship between a BSS bandwidth and a quantity of parking channels is shown in Table 2.

**Table 2**

| BSS bandwidth | Quantity of parking channels |
|---|---|
| 320 MHz or 160+160 MHz | 8 |
| 240 MHz or 160+80 MHz | 6 |
| 160 MHz or 80+80 MHz | 4 |
| 80 MHz | 2 |
| 40 MHz or 20 MHz | 1 |

If a bandwidth of each segment is 20 MHz, the mapping relationship between a BSS bandwidth and a quantity of parking channels is shown in Table 3.

**Table 3**

| BSS bandwidth | Quantity of parking channels |
|---|---|
| 320 MHz or 160+160 MHz | 16 |
| 240 MHz or 160+80 MHz | 12 |
| 160 MHz or 80+80 MHz | 8 |
| 80 MHz | 4 |
| 40 MHz | 2 |
| 20 MHz | 1 |

For the first rotation mechanism, a quantity of parking channels is equal to a quantity of TWT service periods included in each TWT interval. Therefore, for the first rotation mechanism, the quantity of parking channels in Table 1 to Table 3 may alternatively be the quantity of TWT service periods included in each TWT interval.

In addition, the mapping relationship table may be notified by the AP to the station by using signaling, and correspondences of the mapping relationship may be updated. Certainly, the mapping relationship may alternatively be agreed in a protocol. Both the AP and the STA may store the same mapping relationship. After receiving BSS bandwidth information sent by the AP, the station queries the stored mapping relationship, to determine the quantity N of channels that can be rotated.

In an example, before sending the channel rotation information, the access point may further first notify the station of a set of channels that can be rotated. Further, the access point indicates a sequence for rotation between channels in the set of channels that can be rotated.

Optionally, before S401, the method further includes S406: The access point sends information about a set of channels that can be rotated. In an example, the access point may indicate the set of channels to the station. The set of channels that can be rotated may be a predefined set of channels. For example, the access point may add, to a management frame, the information about the set of channels that can be rotated, for example, a beacon frame (Beacon), and broadcast or send the information to the station. The information about the set of channels that can be rotated may be a list of one or more channel numbers (channel numbers). As shown in FIG. 2, the 320 MHz bandwidth includes sixteen 20 MHz channels in total. If the AP sets the first, the fifth, the ninth, and the thirteenth channels as a set of channels that can be rotated, the AP may add channel numbers of the first, the fifth, the ninth, and the thirteenth channels to the beacon frame, to indicate that the first, the fifth, the ninth, and the thirteenth channels are used as the set of channels that can be rotated. In still another possible implementation, the information about the set of channels that can be rotated may alternatively be a bitmap. One bit corresponds to one channel, and a first value of the bit indicates that the corresponding channel is a channel that can be rotated. For example, the bitmap includes 16 bits corresponding to sixteen 20 MHz channels. A value 0100 1000 0010 0001 of the bitmap indicates that the set of channels that can be rotated includes the channel 2, the channel 5, the channel 11, and the channel 16.

In another example, the set of channels that can be rotated may alternatively be determined according to a preset rule. For example, a set of channels, in all 80 MHz segments, that are in a same relative location as the primary channel in its segment may be used as a set of channels that can be rotated. Refer to FIG. 2. The first 80 MHz segment is primary 80 MHz, and a primary channel is located on the first channel in the 80 MHz segment. Therefore, the first channels (channels 5, 9, and 13) in other 80 MHz segments may also be used in the set of channels that can be rotated. In this example, before step S401, S406 may not be included. In other words, after receiving the channel rotation indication, the station determines, according to the preset rule, the set of channels that can be rotated.

In still another example, the access point may also add, to the TWT element, information about a set of channels that can be rotated, to indicate a channel on which the station can perform rotation. The information about the set of channels that can be rotated may be a channel number (channel number) list and a bitmap.

Optionally, step S406 may alternatively be performed at another moment before step S403. This is not limited in this embodiment of this application.

The TWT element may include at least one of the channel rotation information, the channel rotation sequence information, or information about the quantity of channels that can be rotated. The channel rotation information, the channel rotation sequence information, and the information about the quantity of channels that can be rotated may be referred to as TWT parameters. The TWT element includes an element identifier (element ID) field, a length (length) field, a control (control) field, and a TWT parameter information (TWT parameter information) field. It may be understood that the TWT element may include at least one of the channel rotation information and the channel rotation sequence information, and optionally, the TWT element includes the quantity of channels that can be rotated.

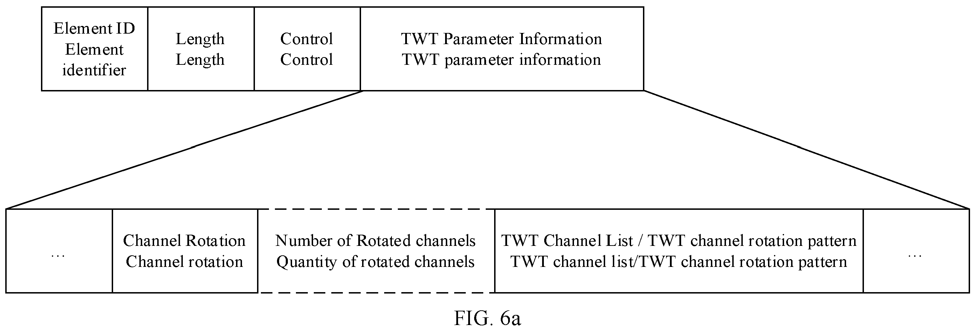

The following further describes a specific carrying manner. In an implementation, the channel rotation information, the channel rotation sequence information, and the information about the quantity of channels that can be rotated may be carried in a TWT parameter information field in the TWT element. FIG. 6a is a schematic diagram of a structure of a TWT element. A TWT parameter information field in the TWT element includes one or more of the foregoing information.

In another possible implementation, the channel rotation information may be carried in a reserved bit in the TWT element, and the channel rotation sequence information and the information about the quantity of channels that can be rotated may be carried in a TWT parameter information field in the TWT element.

Optionally, the TWT element may be an individual TWT information element (individual TWT information element), or may be a broadcast TWT information element (broadcast TWT information element). The TWT element may carry a 1-bit indication that indicates whether the TWT element is an individual TWT information element or a broadcast TWT information element.

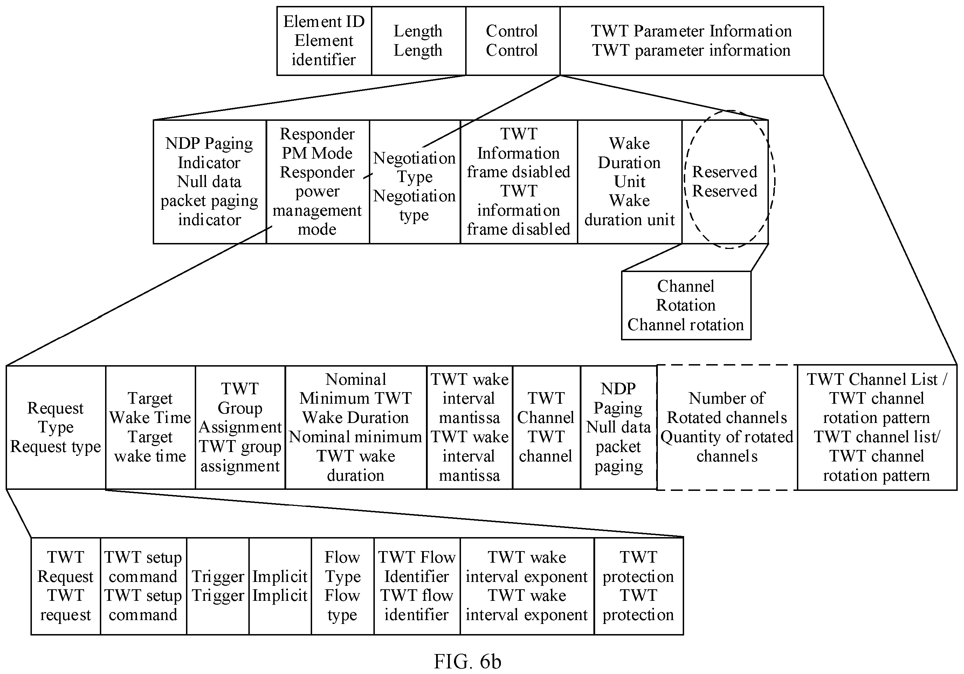

If the TWT information element is an individual TWT information element, an implementation of a frame structure of the TWT information element is shown in FIG. 6b. The channel rotation indication is included in reserved bits in a control field, for example, reserved bits B6 to B7. One of the reserved bits, for example, B6, may be used for the channel rotation indication. The channel rotation sequence information and the information about the quantity of channels that can be rotated may be carried in the TWT parameter information field.

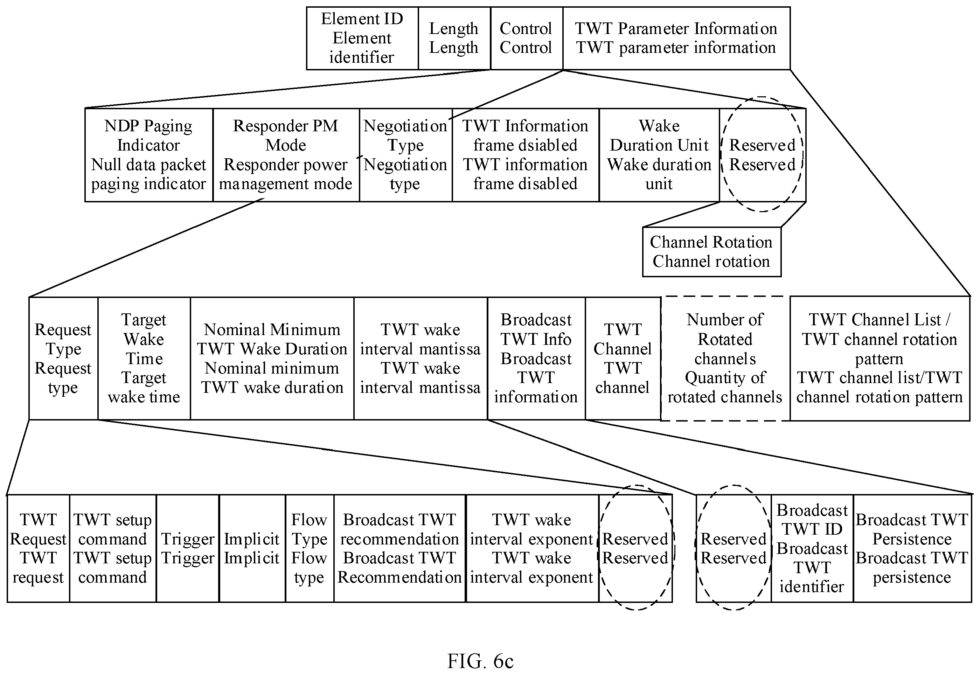

If the TWT information element is an individual TWT information element, an implementation of a frame structure of the TWT information element is shown in FIG. 6c. The channel rotation indication is included in reserved bits in a control field or included in broadcast TWT information (Broadcast TWT info), for example, reserved bits B6 to B7 in the control field or B0 to B2 in the broadcast TWT information field. One of the reserved bits may be used for the channel rotation indication. The TWT channel field, the channel rotation sequence information, and the information about the quantity of channels that can be rotated may be carried in the TWT parameter information field.

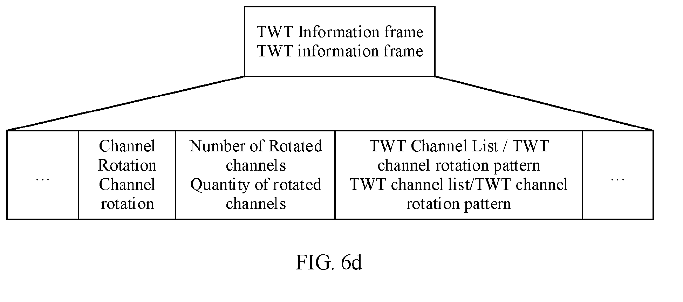

Optionally, if the TWT protocol is established, when the access point or the station needs to modify the established TWT parameter, the access point or the station may send a MAC frame, for example, a TWT information frame (TWT information frame), to carry a new TWT parameter, so as to modify an original TWT parameter, thereby updating the TWT parameter. Optionally, the TWT parameter includes channel rotation information, channel rotation sequence information, and information about a quantity of channels that can be rotated. After the access point and the station determine the new TWT parameter by exchanging the TWT information frame, channel rotation is performed in a channel rotation manner indicated by the new TWT parameter. This can implement real-time adjustment and rotation manner control, thereby improving flexibility. Optionally, an example of a frame structure of the TWT information frame is shown in FIG. 6d.

According to the solution in this embodiment of this application, the station operates or parks on different segments, and performs parking channel rotation between the different segments. Therefore, a possibility that a station allocated to be close to a primary channel is no longer always high and a possibility that a station allocated to park far from the primary channel is no longer always low, which ensures fairness between a plurality of stations.

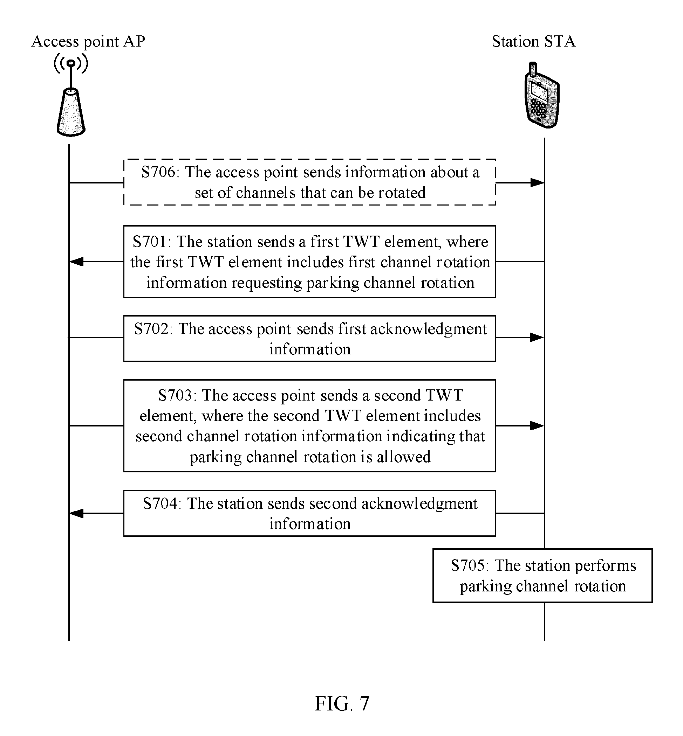

An embodiment 2 provides another channel indication method in a wireless local area network. FIG. 7 is a schematic flowchart of another channel indication method in a wireless local area network according to an embodiment.

S701: A station sends a first TWT element, where the first TWT element includes first channel rotation information, and the first channel rotation information requests parking channel rotation.

In this embodiment of this application, the station is a TWT requesting STA, and requests to perform parking channel rotation or notifies an access point that the station desires to perform parking channel rotation. Optionally, the station may further add, to the first TWT element, a TWT parameter with which that the station desires to (desire to) perform parking channel rotation. Optionally, the TWT parameter includes channel rotation sequence information and information about a quantity of channels that can be rotated. The channel rotation sequence information carried in the first TWT element indicates a sequence in which the station desires or requests to perform channel rotation, and the quantity of channels that can be rotated carried in the first TWT element indicates a quantity of channels between which the station expects or requests to perform channel rotation. In an example, for implementations of the channel rotation information, the channel rotation sequence information, and the information about the quantity of channels that can be rotated in the first TWT element, refer to descriptions in the embodiment 1. Optionally, for a frame structure of the first TWT element, refer to the embodiment 1, for example, refer to FIG. 6a to FIG. 6c. Details are not described herein again. In step S701, the station may carry the first TWT element, to indicate the TWT parameter with which the TWT desires to perform parking channel rotation. Therefore, the station may also carry, in the first TWT element, information about a set of channels that can be rotated, to indicate a set of channels between which the station expects to perform rotation. The information about the set of channels that can be rotated may be a channel number (channel number) list or a bitmap. For a specific implementation, refer to the embodiment 1. Details are not described herein again.

S702: An access point sends a first acknowledgment message for the first TWT element.

After receiving the first TWT element, the access point sends an acknowledgment of the first TWT element to the station. The first acknowledgment message may be an acknowledgment frame, and is used to acknowledge whether a frame carrying the first TWT element is received.

S703: The access point sends a second TWT element to the station, where the second TWT element includes second channel rotation information, and the second channel rotation information indicates that requested parking channel rotation is allowed.

In embodiments of this application, the access point is a TWT responding STA, and indicates that the station is allowed to perform parking channel rotation. Optionally, the access point may further add, to the second TWT element, an allowed TWT parameter for parking channel rotation. Optionally, the TWT parameter includes channel rotation sequence information and information about a quantity of channels that can be rotated. The channel rotation sequence information carried in the second TWT element indicates an allowed sequence in which the station performs channel rotation, and the quantity of channels that can be rotated carried in the second TWT element indicates an allowed quantity of channels between which the station performs channel rotation. For specific implementation of the second TWT element, refer to the descriptions in the embodiment 1. In an example, for implementations of the channel rotation information, the channel rotation sequence information, and the information about the quantity of channels that can be rotated in the second TWT element, refer to descriptions in the embodiment 1. Optionally, for a frame structure of the second TWT element, refer to the embodiment 1, for example, refer to FIG. 6a to FIG. 6c. Details are not described herein again.

S704: The station sends a second acknowledgment message for the second TWT element.

After receiving the second TWT element, the station sends an acknowledgment of the second TWT element to the access point. The second acknowledgment message may be an acknowledgment frame, and is used to acknowledge whether a frame carrying the second TWT element is received.

Based on interaction in the foregoing steps S701 to S704, a TWT protocol is established between the access point and the station. For the TWT protocol and a rotation mechanism in this embodiment of this application, refer to the descriptions in the embodiment 1. Details are not described herein again.

S705: The station performs parking channel rotation.

The station may determine, based on the channel rotation information, whether to perform parking channel rotation. For example, the station may determine, based on the channel rotation information in the second TWT element, whether to perform parking channel rotation. If parking channel rotation can be performed, the station may perform rotation based on a sequence indicated in the second TWT element or a predefined sequence.

For step S705, refer to step S403 in the embodiment 1. Details are not described herein again.

Optionally, the method further includes S706: The access point sends information about a set of channels that can be rotated. The information about the set of channels that can be rotated may be a channel number (channel number) list, or may be a bitmap. For a specific implementation, refer to S406 in the embodiment 1. It should be noted that

FIG. 7 shows only a case in which step S706 is performed before step S701. Optionally, step S701 may be performed at any other moment before step S705. This is not limited in this embodiment of this application.

It should be noted that, for the TWT parameter included in the TWT element in the embodiment 2, refer to the descriptions in the embodiment 1, and for a structure of the TWT element, refer to the descriptions in the embodiment 1.

According to the solution in this embodiment of this application, the station operates or parks on different segments, and performs parking channel rotation between the different segments. Therefore, a possibility that a station allocated to be close to a primary channel is no longer always high and a possibility that a station allocated to park far from the primary channel is no longer always low, which ensures fairness between a plurality of stations.

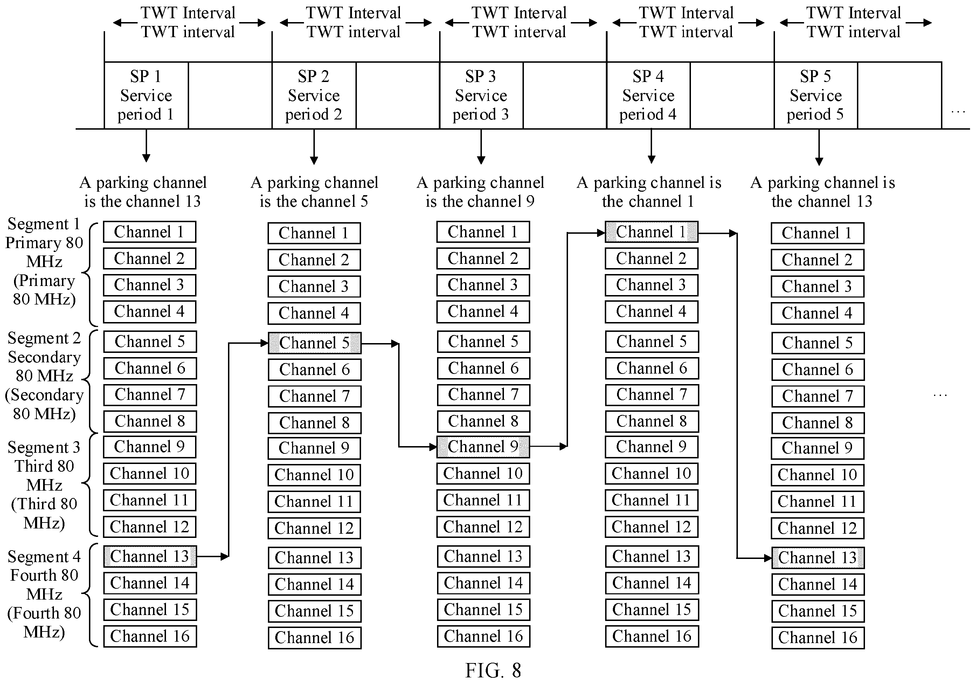

FIG. 8 shows an example in which a station performs parking channel rotation according to an embodiment of this application. The station performs parking channel rotation among service periods in four TWT intervals. The station parks on the channel 13 in the SP 1. The station may receive, on the segment 4, downlink data sent by the access point AP or be triggered to send uplink data. However, because a probability that an access point obtains a 320 MHz channel through contention is low, a probability that the station is served by the access point is low. In the SP 2, the station parks on the channel 5, and may receive, on the segment 2, downlink data sent by the access point AP or may be triggered to send uplink data. A probability that the access point obtains a 160 MHz channel through contention is greater than a probability that the access point obtains a 320 MHz channel through contention. Therefore, a probability that the station in the SP 2 when parking on the channel 5 is served is improved compared with in the SP 1. Parking channel rotation is performed, so that the station is not always on a channel with a low probability to be served or always on a channel with a high probability to be served, which improves fairness.

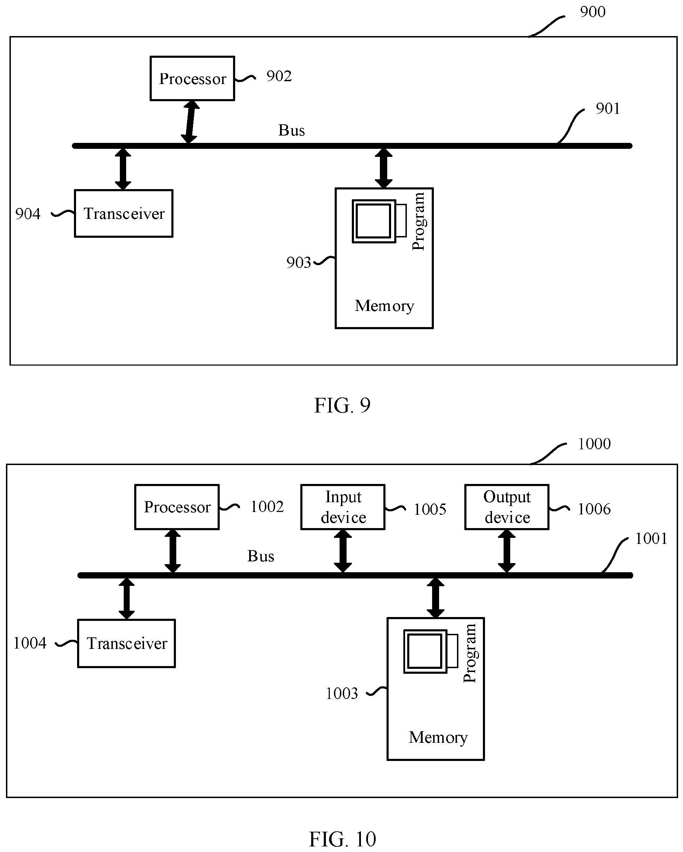

FIG. 9 is a possible schematic diagram of a structure of an apparatus 900 in the foregoing embodiment. Due to a difference in integration, the communication apparatus may include one or more of the components shown in FIG. 9, and may be configured to perform the method or the steps related to the access point in the foregoing embodiments. Components shown in FIG. 9 may include a processor 902, a computer-readable storage medium/memory 903, a transceiver 904, and a bus 901. The processor, the transceiver, the computer-readable storage medium, and the like are connected through the bus. A specific connection medium between the foregoing components is not limited in this embodiment of this application.

In an example, the apparatus 900 may be a chip system or a processing system, and is applied to an entire device to control the entire device to implement the method in the foregoing embodiments. Further, the chip system or the processing system may include the processor, and optionally, further include the computer-readable storage medium/memory. In another example, the apparatus 900 may be an entire device, to implement the method in the foregoing embodiments. For example, the device may include a processor, a transceiver, and the like.

In a possible implementation, the apparatus 900 may be configured to be an AP (for example, the AP 105) in the foregoing WLAN communication system. The apparatus 900 may perform the method and steps related to the AP in any one of the foregoing embodiments.

For example, the transceiver 904 may be configured to support the AP to communicate with one or more STAs in the foregoing embodiments, and may perform receiving and sending processes related to the AP in FIG. 4 to FIG. 7 and/or another process used for the technology described in this application.

For example, the transceiver 904 may be configured to perform S401, S406, or S405. For another example, the transceiver 904 may be configured to perform S702, S703, or S706, or receive the first TWT element in S701, or receive the acknowledgment frame in S704. Certainly, the transceiver 904 may be further configured to perform another process and method of the technology described in this application.

The processor 902 is configured to control and manage an action of the AP, is configured to perform processing performed by the AP in the foregoing embodiments, may perform processing processes of the AP in FIG. 3 to FIG. 9 and/or another process used for the technology described in this application, may be responsible for managing the bus, and may execute a program or instructions stored in the memory. For example, the processor 902 may be configured to generate the information sent in S401 or S406, and may be configured to parse the information received in S405. For another example, the processor 902 may be configured to generate the information sent in S706, S702, or S703, and may further parse the information in S701 and S704. Certainly, the processor 902 may be further configured to perform another process and method of the technology described in this application.

Optionally, the apparatus 900 includes the computer-readable storage medium/memory 903, and the computer-readable storage medium/memory 903 stores a program, instructions, or data for performing the technical solutions of this application. For example, the computer-readable storage medium/memory 903 may include instructions sufficient to allow the apparatus 900 to perform the methods and functions in any one of the foregoing embodiments.

In another possible implementation, the apparatus 900 may be configured to be a chip or a processing system in an AP (for example, the AP 105) in the foregoing WLAN communication system. An entire device on which the chip or the processing system is installed may perform the method and the steps related to the AP in any one of the foregoing embodiments.

The communication apparatus 900 includes a processor, and optionally, further includes the computer-readable storage medium/memory 903. The computer-readable storage medium/memory 903 stores a program, instructions, or data for performing the technical solutions of this application. For example, the computer-readable storage medium/memory 903 may include instructions sufficient to allow the apparatus 900 to perform the methods and functions in any one of the foregoing embodiments. For example, the processor reads and runs the instructions, and controls the apparatus on which the processing system is installed to implement the method and the steps related to the AP in any one of the foregoing embodiments.

Optionally, the processor may include a processing circuit and a communication interface circuit. The processing circuit may be configured to generate the information sent in S401 or S406, and may be configured to parse the information received in S405. For another example, the processing circuit may be configured to generate the information sent in S706, S702, or S703, and may further parse the information in S701 and S704. The communication interface circuit is configured to output information generated by the processing circuit, and may further be applied to input information or instructions received by a device in a memory to the processing circuit for processing.

Optionally, the computer-readable storage medium/memory 903 may be an internal memory located inside the processor, or may be an external memory located outside the processor and coupled to the processor.

It may be understood that FIG. 9 merely shows a simplified design of the communication apparatus 900. During actual application, the communication apparatus 900 may include any quantity of transceivers, processors, memories, and the like. All communication apparatuses 900 that can implement this application fall within the protection scope of this application.

FIG. 10 is a possible schematic diagram of a structure of an apparatus 1000 in the foregoing embodiment. Due to a difference in integration, the communication apparatus may include one or more of the components shown in FIG. 10, and may be configured to perform the method or the steps related to the station in the foregoing embodiments. Components shown in FIG. 10 may include a processor 1002, a computer-readable storage medium/memory 1003, a transceiver 1004, an input device 1005, an output device 1006, and a bus 1001. The processor, the transceiver, the computer-readable storage medium, and the like are connected through the bus. A specific connection medium between the foregoing components is not limited in this embodiment of this application. In an example, the apparatus 1000 may be an entire device, to implement the method in the foregoing embodiment. For example, the device may include a processor, a transceiver, an input/output device, and the like. In another example, the apparatus 1000 may be a chip system or a processing system, and is applied to an entire device to control the entire device to implement the method in the foregoing embodiments. Further, the chip system or the processing system may include the processor, and optionally, further include the computer-readable storage medium/memory.

In a possible implementation, the apparatus 1000 may be configured to be a STA (for example, any one of the STA 101 to the STA 104) in the WLAN communication system 100.

The transceiver 1004 may be configured to support the STA in communicating with the AP, and may perform communication or interaction processes related to the STA in FIG. 4 to FIG. 8 and/or another process used for the technology described in this application. For example, the transceiver 1004 may be configured to perform S402, S405, and S404. For another example, the transceiver 1004 may be further configured to perform S701 and S704, or configured to receive information in S706, S702, or S703.

The processor 1002 is configured to control and manage an action of the STA, is configured to perform processing performed by the STA in the foregoing embodiments, may perform processing processes related to the STA in FIG. 4 to FIG. 8, may be responsible for managing the bus, and may execute a program or instructions stored in the memory. For example, the processor 1002 may be configured to parse the information in S401 or S406, may generate the information in S404, and may perform step S403. For another example, the processor 1002 may be configured to parse the information received in S706, S702, or S703, may be further configured to generate the information in S701 or S704, and may be further configured to perform step S705.

Optionally, the computer-readable storage medium/memory 1003 stores a program, instructions, and data for performing the technical solutions of this application. For example, the computer-readable storage medium/memory 1003 may include instructions sufficient to allow the apparatus 1000 to perform a function of the station in any one of the foregoing embodiments.

Optionally, the apparatus 1000 may further include an input device 1005 and an output device 1006. The input device 1005 and the output device 1006 may be a display screen, a keyboard, an audio interface, or the like.

In another possible implementation, the apparatus 1000 may be configured to be a chip or a processing system in the STA in the foregoing WLAN communication system. An entire device on which the chip or the processing system is installed may perform the method and the steps related to the STAin any one of the foregoing embodiments.

The communication apparatus 1000 includes a processor, and optionally, further includes the computer-readable storage medium/memory 1003. The computer-readable storage medium/memory 1003 stores a program, instructions, or data for performing the technical solutions of this application. For example, the computer-readable storage medium/memory 1003 may include instructions sufficient to allow the apparatus 1000 to perform the methods and functions in any one of the foregoing embodiments. For example, the processor reads and runs the instructions, and controls the apparatus on which the processing system is installed to implement the method and the steps related to the STA in any one of the foregoing embodiments.

Optionally, the processor may include a processing circuit and a communication interface circuit. The processing circuit may be configured to generate the information sent in S404, may be configured to parse the information received in S406 or S402, and may further perform step S403. For another example, the processing circuit may be configured to generate the information sent in S701 or S704, may further parse the information in S706, S702, and S703, and may further perform S705. The communication interface circuit is configured to output information generated by the processing circuit, and may further be applied to input information or instructions received by a device in a memory to the processing circuit for processing.

Optionally, the computer-readable storage medium/memory 1003 may be an internal memory located inside the processor, or may be an external memory located outside the processor and coupled to the processor.

It may be understood that FIG. 10 merely shows a simplified design of the communication apparatus 1000. During actual application, the communication apparatus 1000 may include any quantity of transceivers, processors, memories, and the like. All communication apparatuses 1000 that can implement this application fall within the protection scope of the present invention.

The processor in the apparatus 900 or the apparatus 1000 may be a general-purpose processor such as a general-purpose central processing unit (CPU), a network processor (Network Processor, NP for short), or a microprocessor, or may be an application-specific integrated circuit (application-specific integrated circuit, ASIC for short), or one or more integrated circuits configured to control program execution in the solutions of this application. The processor may be alternatively a digital signal processor (Digital Signal Processor, DSP for short), a field programmable gate array (Field Programmable Gate Array, FPGA for short) or other programmable logic device, discrete gate or transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations according to program instructions stored in the memory.

The computer-readable storage medium/memory may further store an operating system and another application program. Specifically, the program may include program code, and the program code includes computer operation instructions. More specifically, the memory may be a read-only memory (read-only memory, ROM for short), another type of static storage device that can store static information and instructions, a random access memory (random access memory, RAM for short), another type of dynamic storage device that can store information and instructions, a disk memory, or the like. The memory 1803 may be a combination of the foregoing storage types. In addition, the computer-readable storage medium/memory may be located in the processor, or may be located outside the processor, or distributed in a plurality of entities including the processor or a processing circuit. The computer-readable storage medium/memory may be specifically embodied in a computer program product. For example, the computer program product may include a computer-readable medium in a packaging material.

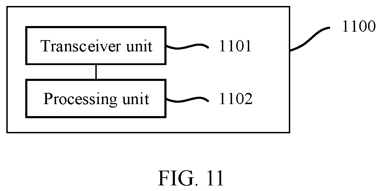

FIG. 11 shows a possible schematic diagram of a structure of a channel indication apparatus 1100 according to this application. The apparatus 1100 may include a transceiver unit 1101 and a processing unit 1102.

In a possible implementation, the apparatus 1100 may be configured to be the AP (for example, the AP 105) in the foregoing WLAN communication system 100, or configured to be a chip system or a chip in the AP. The apparatus 1100 may perform the method and steps related to the AP in any one of the foregoing embodiments.

For example, the transceiver unit 1101 may be configured to support the AP to communicate with one or more STAs in the foregoing embodiments, and may perform receiving and sending processes related to the AP in FIG. 4 to FIG. 8 and/or another process used for the technology described in this application.

In an example, the transceiver unit 1101 may be configured to send a TWT element, may be configured to send information about a set of channels that can be rotated, and may be further configured to receive an acknowledgment frame. For structures of the TWT element and the information about the set of channels that can be rotated, refer to descriptions in the foregoing embodiments. For example, the transceiver unit may be configured to perform S401, S405, S404, or S406. The processing unit is configured to generate signaling or data input or output by the transceiver unit, for example, generate or parse the information in S401, S405, S404, or S406.

In another example, the transceiver unit 1101 may be configured to send the second TWT element, the first acknowledgment frame, and the information about the set of channels that can be rotated, and may be further configured to receive the second acknowledgment information and the first TWT element. For structures of the TWT element and the information about the set of channels that can be rotated, refer to descriptions in the foregoing embodiments. For example, the transceiver unit may be configured to perform S701, S702, S703, S704, and S706. The processing unit is configured to generate signaling or data input or output by the transceiver unit, for example, generate or parse the information in S701, S702, S703, S704, or S706.

In another possible implementation, the apparatus 1000 may be configured to be a STA in the foregoing WLAN communication system 100. For example, the transceiver unit may be configured to support the STA to communicate with the AP in the foregoing embodiments, and may perform receiving and sending processes related to the second STA in FIG. 4 to FIG. 8 and/or another process used for the technology described in this application.

In an example, the transceiver unit 1101 may be configured to send an acknowledgment frame, and may be configured to receive a TWT element. The processing unit 1102 is configured to generate or process signaling or data information, or perform channel rotation. For example, the transceiver unit 1101 may be configured to perform S404, and the processing unit 1102 may be configured to perform S403.

In another example, the transceiver unit 1101 may be configured to send a first TWT element, acknowledgment information, and may be configured to receive a second TWT and acknowledgment information. The processing unit 1102 is configured to generate or process signaling or data information, or perform channel rotation. For example, the transceiver unit 1101 may be configured to perform S701, S702, S703, S704, and S706. The processing unit 1102 may be configured to perform S705.

It should be noted that for structures of the TWT element and the information about the set of channels that can be rotated mentioned above, refer to the descriptions in the foregoing embodiments. Details are not described herein again.

For example, the apparatus 1100 may be a chip or a chip system, the transceiver unit 1101 in the chip or the chip system may be an input/output interface, and the processing unit 1102 may be a processing circuit. In the foregoing embodiments, "send" may be "output", and "receive" may be "input". Therefore, the input/output interface completes signaling or data interaction, and the processing circuit completes signaling or data information generation and processing.

Optionally, the apparatus 1100 may be further coupled to a memory. The memory stores instructions. When the processing circuit runs the instructions, the apparatus 1100 is enabled to perform the method and the steps in any one of the foregoing embodiments. For example, the memory may be a storage unit included in the apparatus 1100, or may be an external storage unit outside the apparatus 1100.

An embodiment of this application further provides a chip system. The chip system includes a processor, configured to support an AP or a STA to implement the function in any of the foregoing embodiments, for example, to generate or process data and/or information in the foregoing methods. In a possible design, the chip system may further include a memory. The memory is configured to store program instructions and data that are necessary for a transmit end or a receive end. When the processor runs the program instructions, a device mounted in the chip system is enabled to perform the method in any one of the foregoing embodiments. The chip system may include a chip, or may include a chip and another discrete component.

An embodiment of this application further provides a processor, configured to be coupled to a memory. The memory stores instructions. When the processor runs the instructions, the processor is enabled to perform the method and function related to the AP or the STA in any one of the foregoing embodiments. An embodiment of this application further provides a computer program product including instructions. When the computer program product runs on a computer, the computer is enabled to perform the method and function related to the AP or the STA in any one of the foregoing embodiments. An embodiment of this application further provides a computer-readable storage medium. The computer-readable storage medium stores instructions. When a processor runs the instructions, the processor is enabled to perform the method and function related to the AP or the STA in any one of the foregoing embodiments. An embodiment of this application further provides an apparatus, configured to perform the method and the function that are related to the receive end or the transmit end in any one of the foregoing embodiments.

An embodiment of this application further provides a wireless communication system. The system includes the AP and at least one STA in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When the embodiments of this application is implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose or special-purpose computer.

## Claims

1. A channel indication method for a wireless local area network, WLAN, wherein the method comprises:
generating, by an access point, AP, a target wake time, TWT, element, wherein the TWT element is for establishing a TWT protocol with a station, the TWT element comprises channel rotation information, and the channel rotation information indicates the station to perform parking channel rotation; and
sending (S401), by the AP, the TWT element to the station.

2. A channel indication method for a wireless local area network, WLAN, wherein the method comprises:
receiving (S402), by a station, STA, a target wake time, TWT, element from an access point, wherein the TWT element is for establishing a TWT protocol between the access point and the station, the TWT element comprises channel rotation information, and the channel rotation information indicates the station to perform parking channel rotation; and
performing (S403), by the station, parking channel rotation based on the TWT element.

3. The method according to claim 1 or 2, wherein the channel rotation information comprises a channel rotation indication, and the channel rotation indication is carried in a reserved bit in the TWT element.

4. The method according to claim 3, wherein in the TWT protocol, one TWT wake interval comprises a plurality of TWT service periods, and the channel rotation indication indicates the station to perform parking channel rotation among the plurality of TWT service periods.

5. The method according to claim 3, wherein in the TWT protocol, one TWT wake interval comprises one TWT service period, and the channel rotation indication indicates the station to perform parking channel rotation among a plurality of TWT service periods in a plurality of TWT wake intervals.

6. The method according to any one of claims 1 to 5, wherein the TWT element further comprises a quantity of parking channels that can be rotated.

7. The method according to any one of claims 1 to 6, wherein the TWT element further comprises channel rotation sequence information indicating a channel rotation sequence.

8. The method according to claim 7, wherein the channel rotation sequence information comprises a plurality of TWT channel numbers, and one TWT channel number indicates one parking channel.

9. The method according to claim 8, wherein the channel rotation sequence is consistent with a sequence of the TWT channel numbers.

10. The method according to claim 7, wherein the channel rotation sequence information comprises a TWT channel rotation pattern field that indicates a parking channel rotation sequence.

11. The method according to any one of claims 1 to 10, wherein the TWT element further comprises a TWT channel field, and the TWT channel field indicates an initial channel on which channel rotation is performed.

12. The method according to any one of claims 1 to 11, wherein the TWT element is an individual TWT information element or a broadcast TWT information element.

13. A communication apparatus (900), wherein the apparatus comprises a processor (902) and a memory (903), and the memory is configured to store instructions; and when the processor runs the instructions, the communication apparatus is enabled to perform the method according to any one of claims 1 to 12.

14. A chip, comprising an input/output interface and a processing circuit, wherein the input/output interface is for information or data exchange, and the processing circuit is configured to run instructions, to enable an apparatus in which the chip is installed to perform the method according to any one of claims 1 to 12.

15. A computer-readable storage medium, wherein the computer-readable storage medium stores instructions, and the instructions are executed by one or more processors on a processing circuit; and when the computer-readable storage medium runs on a computer, the computer is enabled to perform the method according to any one of claims 1 to 12.

## Patentansprüche

1. Kanalanzeigeverfahren für ein drahtloses lokales Netzwerk, WLAN, wobei das Verfahren Folgendes umfasst:
Erzeugen, durch einen Zugangspunkt, AP, eines Zielaufwachzeitelements, TWT-Elements, wobei das TWT-Element zum Aufbauen eines TWT-Protokolls mit einer Station dient, das TWT-Element Kanalrotationsinformationen umfasst und die Kanalrotationsinformationen der Station anzeigen, eine Parkkanalrotation durchzuführen; und
Senden (S401), durch den AP, des TWT-Elements an die Station.

2. Kanalanzeigeverfahren für ein drahtloses lokales Netzwerk, WLAN, wobei das Verfahren Folgendes umfasst:
Empfangen (S402), durch eine Station, STA, eines Zielaufwachzeitelements, TWT-Elements, von einem Zugangspunkt, wobei das TWT-Element zum Aufbauen eines TWT-Protokolls zwischen dem Zugangspunkt und der Station dient, das TWT-Element Kanalrotationsinformationen umfasst und die Kanalrotationsinformationen der Station anzeigen, eine Parkkanalrotation durchzuführen; und
Durchführen (S403), durch die Station, der Parkkanalrotation basierend auf dem TWT-Element.

3. Verfahren nach Anspruch 1 oder 2, wobei die Kanalrotationsinformationen eine Kanalrotationsanzeige umfassen und die Kanalrotationsanzeige in einem reservierten Bit in dem TWT-Element enthalten ist.

4. Verfahren nach Anspruch 3, wobei in dem TWT-Protokoll ein TWT-Aufwachintervall eine Vielzahl von TWT-Dienstperioden umfasst und die Kanalrotationsanzeige der Station anzeigt, die Parkkanalrotation unter der Vielzahl von TWT-Dienstperioden durchzuführen.

5. Verfahren nach Anspruch 3, wobei in dem TWT-Protokoll ein TWT-Aufwachintervall eine TWT-Dienstperiode umfasst und die Kanalrotationsanzeige der Station anzeigt, die Parkkanalrotation unter einer Vielzahl von TWT-Dienstperioden in einer Vielzahl von TWT-Aufwachintervallen durchzuführen.

6. Verfahren nach einem der Ansprüche 1 bis 5, wobei das TWT-Element ferner eine Anzahl an Parkkanälen umfasst, die rotiert werden können.

7. Verfahren nach einem der Ansprüche 1 bis 6, wobei das TWT-Element ferner Kanalrotationssequenzinformationen umfasst, die eine Kanalrotationssequenz anzeigen.

8. Verfahren nach Anspruch 7, wobei die Kanalrotationssequenzinformationen eine Vielzahl von TWT-Kanalnummern umfassen und eine TWT-Kanalnummer einen Parkkanal anzeigt.

9. Verfahren nach Anspruch 8, wobei die Kanalrotationssequenz mit einer Sequenz der TWT-Kanalnummern übereinstimmt.

10. Verfahren nach Anspruch 7, wobei die Kanalrotationssequenzinformationen ein TWT-Kanalrotationsmusterfeld umfassen, das eine Parkkanalrotationssequenz anzeigt.

11. Verfahren nach einem der Ansprüche 1 bis 10, wobei das TWT-Element ferner ein TWT-Kanalfeld umfasst und das TWT-Kanalfeld einen Anfangskanal anzeigt, auf dem die Kanalrotation durchgeführt wird.

12. Verfahren nach einem der Ansprüche 1 bis 11, wobei das TWT-Element ein einzelnes TWT-Informationselement oder ein Rundruf-TWT-Informationselement ist.

13. Kommunikationseinrichtung (900), wobei die Einrichtung einen Prozessor (902) und einen Speicher (903) umfasst und der Speicher dazu konfiguriert ist, Anweisungen zu speichern; und, wenn der Prozessor die Anweisungen ausführt, es der Kommunikationseinrichtung ermöglicht wird, das Verfahren nach einem der Ansprüche 1 bis 12 durchzuführen.

14. Chip, umfassend eine Eingabe-/Ausgabeschnittstelle und eine Verarbeitungsschaltung, wobei die Eingabe-/Ausgabeschnittstelle zum Informations- oder Datenaustausch dient und die Verarbeitungsschaltung dazu konfiguriert ist, Anweisungen auszuführen, um es einer Einrichtung, in welcher der Chip installiert ist, zu ermöglichen, das Verfahren nach einem der Ansprüche 1 bis 12 durchzuführen.

15. Computerlesbares Speichermedium, wobei das computerlesbare Speichermedium Anweisungen speichert und die Anweisungen durch einen oder mehrere Prozessoren auf einer Verarbeitungsschaltung ausgeführt werden; und, wenn das computerlesbare Speichermedium auf einem Computer läuft, es dem Computer ermöglicht wird, das Verfahren nach einem der Ansprüche 1 bis 12 durchzuführen.

## Revendications

1. Procédé d'indication de canaux pour un réseau d'accès local sans fil, WLAN, dans lequel le procédé comprend :
la génération, par un point d'accès, AP, d'un élément de temps de réveil cible, TWT, dans lequel l'élément TWT est destiné à établir un protocole TWT avec une station, l'élément TWT comprend des informations de rotation de canaux, et les informations de rotation de canaux indiquent à la station de réaliser une rotation de canaux de stationnement ; et
l'envoi (S401), par l'AP, de l'élément TWT à la station.

2. Procédé d'indication de canaux pour un réseau d'accès local sans fil, WLAN, dans lequel le procédé comprend :
la réception (S402), par une station, STA, d'un élément de temps de réveil cible, TWT, provenant d'un point d'accès, dans lequel l'élément TWT est destiné à établir un protocole TWT entre le point d'accès et la station, l'élément TWT comprend des informations de rotation de canaux, et les informations de rotation de canaux indiquent à la station de réaliser une rotation de canaux de stationnement ; et
la réalisation (S403), par la station, d'une rotation de canaux de stationnement sur la base de l'élément TWT.

3. Procédé selon la revendication 1 ou 2, dans lequel les informations de rotation de canaux comprennent une indication de rotation de canaux, et l'indication de rotation de canaux est transportée dans un bit réservé dans l'élément TWT.

4. Procédé selon la revendication 3, dans lequel dans le protocole TWT, un intervalle de réveil TWT comprend une pluralité de périodes de service TWT, et l'indication de rotation de canaux indique à la station de réaliser une rotation de canaux de stationnement parmi la pluralité de périodes de service TWT.

5. Procédé selon la revendication 3, dans lequel dans le protocole TWT, un intervalle de réveil TWT comprend une période de service TWT, et l'indication de rotation de canaux indique à la station de réaliser une rotation de canaux de stationnement parmi une pluralité de périodes de service TWT dans une pluralité d'intervalles de réveil TWT.

6. Procédé selon l'une quelconque des revendications 1 à 5, dans lequel l'élément TWT comprend en outre une quantité de canaux de stationnement pouvant être tournés.

7. Procédé selon l'une quelconque des revendications 1 à 6, dans lequel l'élément TWT comprend en outre des informations de séquence de rotation de canaux indiquant une séquence de rotation de canaux.

8. Procédé selon la revendication 7, dans lequel les informations de séquence de rotation de canaux comprennent une pluralité de numéros de canaux TWT, et un numéro de canal TWT indique un canal de stationnement.

9. Procédé selon la revendication 8, dans lequel la séquence de rotation de canaux est cohérente avec une séquence des numéros de canaux TWT.

10. Procédé selon la revendication 7, dans lequel les informations de séquence de rotation de canaux comprennent un champ de modèle de rotation de canaux TWT qui indique une séquence de rotation de canaux de stationnement.

11. Procédé selon l'une quelconque des revendications 1 à 10, dans lequel l'élément TWT comprend en outre un champ de canal TWT, et le champ de canal TWT indique un canal initial sur lequel la rotation de canaux est réalisée.

12. Procédé selon l'une quelconque des revendications 1 à 11, dans lequel l'élément TWT est un élément d'informations TWT individuel ou un élément d'informations TWT diffusé.

13. Appareil de communication (900), dans lequel l'appareil comprend un processeur (902) et une mémoire (903), et la mémoire est configurée pour stocker des instructions ; et lorsque le processeur exécute les instructions, l'appareil de communication est activé pour réaliser le procédé selon l'une quelconque des revendications 1 à 12.

14. Puce, comprenant une interface d'entrée/sortie et un circuit de traitement, dans lequel l'interface d'entrée/sortie est destiné à échanger des informations ou des données, et le circuit de traitement est configuré pour exécuter des instructions, pour activer un appareil dans lequel la puce est installée pour réaliser le procédé selon l'une quelconque des revendications 1 à 12.

15. Support de stockage lisible par ordinateur, dans lequel le support de stockage lisible par ordinateur stocke des instructions, et les instructions sont exécutées par un ou plusieurs processeurs dans un circuit de traitement ; et lorsque le support de stockage lisible par ordinateur fonctionne sur un ordinateur, l'ordinateur est activé pour réaliser le procédé selon l'une quelconque des revendications 1 à 12.
